# EUROPEAN PATENT APPLICATION

(11) **EP 4 556 228 A1**
(43) Date of publication of application: **21.05.2025**
(21) Application number: 23839646.9
(22) Date of filing: 12.07.2023
(51) Int. Cl.: B33Y 10/00, B33Y 30/00, B33Y 50/02, B29C 64/118, B29C 64/188, B29C 64/218, B29C 64/295, B29C 64/393

(54) **THREE-DIMENSIONAL PRINTING APPARATUS, THREE-DIMENSIONAL PRINTING METHOD, AND COMPRESSION APPARATUS**

(30) Priority: 13.07.2022 JP 2022112292
(71) Applicant: Nihon University, Tokyo 102-8275 (JP)
(72) Inventor: UEDA, Masahito, Tokyo 102-8275 (JP)
(74) Representative: advotec.
(86) International application number: PCT/JP2023/025703
(87) International publication number: WO 2024/014474

(57) **Abstract**

In a three-dimensional printing apparatus, a printing material (F) supplied from a nozzle (64) is disposed along a printing path, and a sheet-like material layer (FL) configured with a single layer or a plurality of layers is formed. The material layer (FL) is compressed by a heating member (81) while performing relative movement between a table (3) and the heating member (81).

## Description

### TECHNICAL FIELD

The present invention relates to a three-dimensional printing apparatus, a three-dimensional printing method, and a compression apparatus.

Priority is claimed on Japanese Patent Application No. 2022-112292, filed July 13, 2022, the content of which is incorporated herein by reference.

### BACKGROUND ART

For example, a three-dimensional printing apparatus is known as a device that models objects having a three-dimensional shape (see, for example, Patent Document 1). A three-dimensional printing apparatus does not require costly dies, jigs, or the like, and can easily model three-dimensional shapes that are difficult to form using the related art. In three-dimensional printing apparatuses, a fused deposition modeling method of layering a heat-melted resin little by little has low manufacturing costs and is thus used in trial manufacture of parts in the manufacturing industry.

### Citation List

### Patent Document

[Patent Document 1]

Published Japanese Translation No. 2005-531439 of the PCT International Publication

### SUMMARY OF INVENTION

### Technical Problem

Current three-dimensional printing apparatuses using a fused deposition modeling method have a mechanism for heating and softening filaments made of a thermoplastic resin, and then extruding the softened filaments from a nozzle. For example, the filaments have a line shape with a circular cross section. When such filaments are arranged closely together in a continuous manner and formed into a sheet, and then stacked, voids occur between the filaments. These voids remain in a modeled body formed by a three-dimensional printing apparatus, thereby degrading the mechanical properties of the modeled body.

An object of the present invention is to provide a three-dimensional printing apparatus, a three-dimensional printing method, and a compression apparatus for the three-dimensional printing apparatus which are advantageous in improving the mechanical properties of a modeled body.

### Solution to Problem

Aspects of the present invention adopt the following configurations.

In a first aspect of the present invention, a three-dimensional printing apparatus includes a first mechanism that continuously feeds a printing material through a nozzle, a second mechanism that includes a table on which the printing material is stacked, a third mechanism that includes a heating member, and a control unit that controls the first mechanism, the second mechanism, and the third mechanism, the control unit having a first mode in which the printing material supplied from the nozzle is disposed along a printing path to form a sheet-like material layer, the material layer being configured with a single layer or a plurality of layers, and a second mode in which the material layer is compressed by the heating member while performing relative movement between the table and the heating member after the first mode.

In a second aspect of the present invention, a three-dimensional printing method includes a first step of disposing a printing material supplied from a nozzle on a table along a printing path to form a sheet-like material layer which is configured with a single layer or a plurality of layers, and a second step of compressing the material layer with the heating member while performing relative movement between the table and the heating member after the first step.

In a third aspect of the present invention, a three-dimensional printing apparatus includes a first mechanism including a nozzle that continuously feeds a printing material, a second mechanism including a table on which the printing material is stacked, and a control unit. A compression apparatus for the three-dimensional printing apparatus includes a thermal compression mechanism including a heating member, and the thermal compression mechanism is configured to compress a sheet-like material layer, which is formed of the printing material, with the heating member.

### Advantageous Effects of Invention

According to the aspects of the present invention, a modeling material is heated and pressed in the middle of stacking of the modeling material. For this reason, the modeling material is pressed in a softened state, making it possible to reduce a number of voids between the modeling materials. In addition, adhesive strength between the modeling materials can be increased. Thus, the mechanical properties of a modeled body are improved.

### BRIEF DESCRIPTION OF DRAWINGS

[FIG. 1] A schematic diagram showing an outline of a three-dimensional printing apparatus.
[FIG. 2] A conceptual diagram showing an example of a three-dimensional printing method.
[FIG. 3] A perspective view schematically showing a relationship between a heating roller and a modeling table.
[FIG. 4] A schematic diagram showing a state where a layer of a filament is pressed by a heating roller.
[FIG. 5] A schematic diagram showing a cross section of a filament layer, where part (a) shows an unpressed state and part (b) shows a pressed state.
[FIG. 6] A schematic diagram showing a modification example of the three-dimensional printing apparatus.
[FIG. 7] A schematic diagram showing a modification example of the three-dimensional printing apparatus.
[FIG. 8] A schematic diagram showing a modification example of the three-dimensional printing apparatus.
[FIG. 9] A schematic diagram showing a modification example of the three-dimensional printing apparatus.
[FIG. 10] A schematic diagram showing a modification example of the three-dimensional printing apparatus.
[FIG. 11] A diagram showing the direction of movement of the heating roller relative to a printing path.
[FIG. 12] A schematic diagram showing a modification example of the three-dimensional printing apparatus.

### DESCRIPTION OF EMBODIMENTS

Hereinafter, an embodiment of the present invention will be described with reference to the drawings.

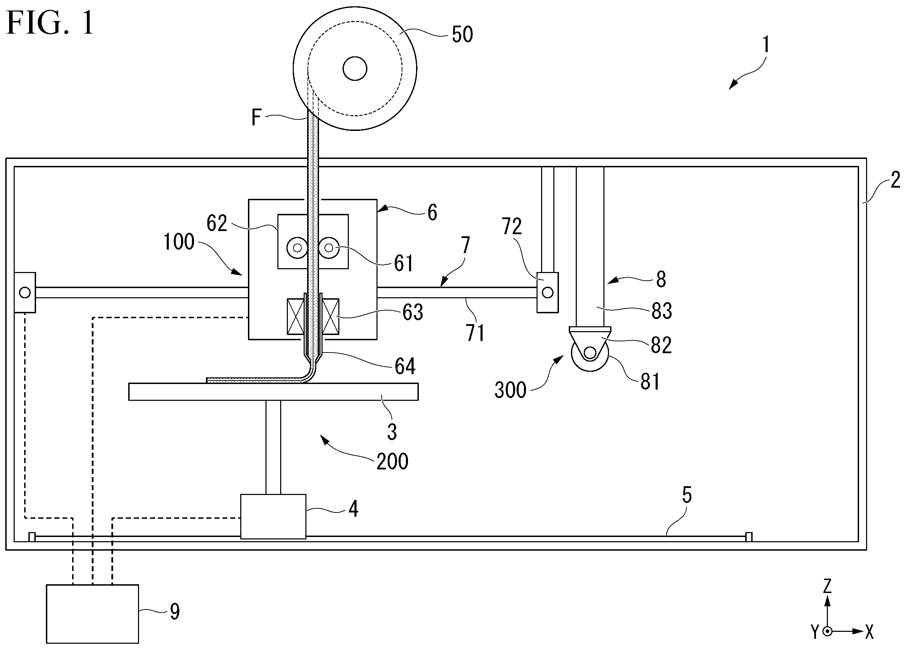

FIG. 1 is a schematic diagram showing an outline of a three-dimensional printing apparatus 1. In one embodiment, the three-dimensional printing apparatus 1 is an apparatus that forms a three-dimensional modeled body by continuously discharging a filament F (modeling material, printing material) onto a modeling table (bed, platform) 3. The three-dimensional printing apparatus 1 stacks the softened filament F onto a modeling table 3. When a stacked body solidifies, a modeled body which is a three-dimensional structure is formed. In a process of stacking the filament F in the three-dimensional printing apparatus 1, a new filament F is disposed on the previously disposed filament F.

The filament (printing material) F, which is the raw material of the modeled body, has a line shape. The filament F is a continuous material that extends continuously along the central axis thereof. In one example, the filament F has the same cross-sectional shape throughout the axial direction. In another example, the filament can have a cross-sectional shape that differs partially. The filament F has, for example, a circular or elliptical cross-section. The cross-sectional shape of the filament F is not limited to a circle (or ellipse), and various shapes such as a polygon can be applied. In one example, the filament F has a resin portion formed in a line (thread-like) shape and fibers contained in the resin portion. The resin portion is formed of a thermoplastic resin such as PLA resin (Poly-Lactic Acid), ABS resin, or nylon resin. In another example, the resin portion can be formed using super engineering plastics such as a polyether ether ketone (PEEK) resin, a polyether ketone ketone (PEKK) resin, or a polyether imide (PEI) resin. Thermoplastic resins other than the above can also be applied as filaments. Examples of the fibers include carbon fiber, glass fiber, or plant fiber. Fibers other than the above can also be applied as fiber elements. The filament F may contain carbon nanotubes.

In one example, the filament F in which continuous line (thread-like) fibers are arranged in the center of a resin portion with a circular cross section can be used. In another example, a filament in which short fibers and non-line shape fibers are dispersed in a resin portion can be used as a modeling material. The modeling material is not limited to the above-mentioned filament F, and may be, for example, a filament configured with a resin portion that does not contain fibers. The diameter (maximum width) of the filament may be approximately 0.1 mm, 0.2 mm, 0.3 mm, 0.4 mm, 0.5 mm, 0.6 mm, 0.7 mm, 0.8 mm, 0.9 mm, 1.0 mm, 1.5 mm, 2.0 mm, 2.5 mm, 3.0 mm, 3.5 mm, 4.0 mm, 4.5 mm, 5.0 mm, 5.5 mm, 6.0 mm, 6.5 mm, 7.0 mm, 7.5 mm, 8.0 mm, 8.5 mm, 9.0 mm, 9.5 mm, or 10 mm. The diameter (maximum width) of the filament may be less than 0.1 mm or may be 10 mm or more.

In one example, as shown in FIG. 1, the filament F containing fibers is prepared in a state of being wound on a bobbin 50. The filament F is pulled out from the bobbin 50 and supplied to the three-dimensional printing apparatus 1. In another example, a bobbin around which a line shape resin is wound and a bobbin around which fibers are wound are prepared separately, and the resin portion and fibers pulled out from each of the bobbins are combined in the three-dimensional printing apparatus 1. The storage state of the filament F is not limited to the winding type.

As shown in FIG. 1, the three-dimensional printing apparatus 1 includes a first mechanism 100 that continuously feeds the filament (printing material) F through a nozzle 64, a second mechanism 200 that includes the modeling table 3 on which the filament F is stacked, a third mechanism (thermal compression mechanism) 300 that includes a heating roller 81 as a heating member, and a control device (control unit, controller) 9 that controls the first mechanism 100, the second mechanism 200, and the third mechanism 300. The control device 9 includes a control program, a storage unit (memory), and a processor (processing circuitry, circuitry) for executing the control program. In one example, the first mechanism 100 includes a head unit 6 and a head moving mechanism 7. In one example, the second mechanism 200 includes a frame 2, the modeling table 3, a lifting device 4, and a slide mechanism 5. In one example, the third mechanism 300 includes a pressing roller unit 8.

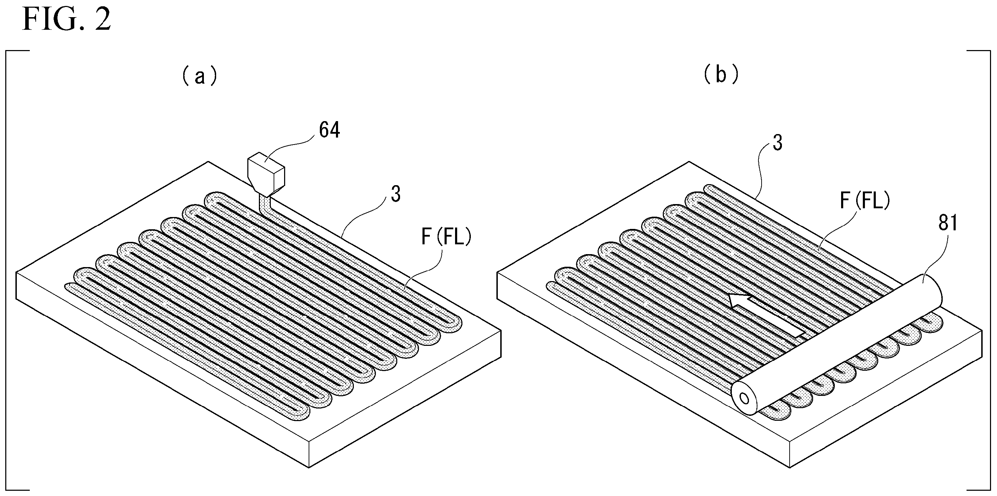

The control device 9 has a first mode (part (a) of FIG. 2) in which the filament (printing material) F supplied from the nozzle 64 is continuously disposed on the modeling table 3 along the printing path to form a sheet-like material layer FL. In the first mode, relative movement (printing movement, printing mode movement) is performed between the head unit 6 (nozzle 64) and the modeling table 3. The sheet-like material layer FL includes at least two adjacent elements (for example, a plurality of line elements arranged adjacent to each other) formed at substantially different timings. The sheet-like material layer FL includes a first segment formed by a first printing movement at a first timing and a second segment formed by a second printing movement at a second timing substantially different from the first timing so as to be adjacent to the first segment. The shape of the sheet-like material layer FL is not limited to a rectangle. The sheet-like material layer FL may have various shapes such as a polygonal shape, a line shape, a curved shape, a circular shape, an elliptical shape, and an annular shape. The sheet-like material layer FL may include a cutout portion, an opening portion, and a folded portion. After the first mode, the control device 9 has a second mode (part (b) of FIG. 2) in which the material layer FL is compressed by the heating roller 81 while performing relative movement between the modeling table 3 and the heating member (heating roller) 81. The material layer FL to be compressed may be configured with one layer (single layer) or a plurality of layers. Alternatively and/or additionally, the three-dimensional printing apparatus 1 can be configured to include a compression apparatus including a third mechanism (thermal compression mechanism) 300 in addition to the initial apparatus. The compression apparatus can include an attachment mechanism. In the compression apparatus, at least parts of the first mechanism 100 and the second mechanism 200 can be used as the third mechanism. Alternatively, in the compression apparatus, a part of the third mechanism 300 can be used as parts of the first mechanism 100 and the second mechanism 200. In FIG. 1, an arrow Z indicates a vertical direction (up-down direction), an arrow X indicates one horizontal direction, and an arrow Y indicates a horizontal direction perpendicular to a Z direction and an X direction.

The frame 2 is a strength member that directly or indirectly supports the modeling table (table) 3, the lifting device 4, the slide mechanism 5, the head unit 6, the head moving mechanism 7, and the pressing roller unit 8. The frame 2 is assembled, for example, so that its overall shape is a rectangular parallelepiped or cubic. The modeling table 3, the lifting device 4, the slide mechanism 5, the head unit 6, the head moving mechanism 7, and the pressing roller unit 8 are accommodated in the frame 2. A plurality of wall portions may be installed to cover a plurality of opening surfaces of the frame 2. At least some of these wall portions may have doors that can be opened and closed. The door allows the modeled body formed inside the frame 2 to be easily removed to the outside of the frame 2. In one example, the frame 2 includes a casing that surrounds a processing chamber. The casing closes the opening surface of the frame 2. The casing can be equipped with an environmental control unit (not shown) that controls the environment inside the chamber as necessary. For example, the environmental control unit may include a mechanism for heating the internal space of the frame 2. For example, the modeled body is formed with the internal space of the frame 2 heated, and thus the thermal effects on the modeled body can be controlled by, for example, curbing warping of the modeled body.

The modeling table 3 is disposed below the head unit 6. In one example, the modeling table 3 includes a flat plate-shaped member (base plate, bed) of which the upper surface is a discharge target surface of the filament F. In another example, the modeling table 3 can have a different shape. In one example, the modeling table 3 can be moved in the Z direction (moved up and down) by the lifting device 4. The modeling table 3 can also be moved in the X direction by the slide mechanism 5. For example, the modeling table 3 can be moved from a position directly below the head unit 6 to a position directly below the pressing roller unit 8. In another example, the movement of the modeling table 3 can be set arbitrarily.

The modeling table 3 may include a heating device (heater). For example, a heater is incorporated in the modeling table, and thus the filament F on the modeling table 3 can be heated using the heater. One surface of the modeling table 3 on which the filament F is disposed is heated, and thus the state of the filament F on the modeling table 3 can be controlled (for example, curing can be curbed). As a heating device for the modeling table 3, various mechanisms that can control the temperature of the resin on the modeling table 3 can be applied in addition to a plate heater, a surface heater, and the like.

The lifting device 4 supports the modeling table 3 from below. The lifting device 4 moves the modeling table 3 in the Z direction under the control of the control device 9. In one example, the lifting device 4 is equipped with a cylinder device or a motor that generates power to move the modeling table 3 up and down. Since the modeling table 3 can move up and down freely, a distance (and a relative positional relationship) between the nozzle 64 of the head unit 6 and the modeling table 3 can be freely adjusted.

The slide mechanism 5 supports the lifting device 4 from below. The slide mechanism 5 moves the lifting device 4 in the X direction under the control of the control device 9. In one example, the slide mechanism 5 includes an actuator that generates power to move the lifting device 4 horizontally, a linear guide that guides the movement of the lifting device 4, and the like. The modeling table 3 moves in the X direction as the lifting device 4 moves. The slide mechanism 5 moves the modeling table 3 in the X direction via the lifting device 4.

For example, when a material layer of the filament F is formed on the modeling table 3, the slide mechanism 5 moves the modeling table 3 to a position where the material layer can be pressed by the pressing roller unit 8. When performing the process of pressing the material layer of the filament F, the slide mechanism 5 moves the modeling table 3 from below the head unit 6 to below the pressing roller unit 8.

The head unit 6 discharges the filament F toward the modeling surface of the modeling table 3. The head unit 6 is supported from above by the head moving mechanism 7. The head unit 6 can also be moved in the X and Y directions by the head moving mechanism 7. In one example, the head unit 6 pulls out the filament F from the bobbin 50 under the control of the control device 9, heats and softens the filament F, and then discharges it.

The head unit 6 includes a pair of filament drive rollers 61 and a motor 62 that drives the filament drive rollers 61. In one example, a stepping motor can be used as the motor 62. In another example, another drive means such as a servo motor can be used as the motor 62. The motor 62 is configured to drive the filament drive rollers 61 at an arbitrary speed. In one example, the head unit 6 is equipped with a cutting device (not shown) that cuts the filament F. For example, the cutting device can cut both the resin element and the fiber element in the filament F. At a predetermined timing, such as when changing the layer on which the filament F is disposed, the head unit 6 cuts the filament F with the cutting device. In another example, the head unit 6 can be equipped with other means for cutting the filament F.

In one example, the filament drive roller 61 is a tire-shaped roller having an outer peripheral surface with a filament holding groove extending in a direction perpendicular to the peripheral direction. The pair of filament drive rollers 61 are disposed at positions where the filament F can be sandwiched therebetween. The rotation speed of each of the filament drive rollers 61 is controlled by the control device 9 in accordance with the amount of the filament F discharged from the head unit 6.

The head unit 6 is equipped with a filament heating device 63 that heats the filament F, and a nozzle 64 that discharges the filament F. The filament heating device 63 is disposed below the filament drive roller 61. In one example, the filament heating device 63 is disposed to cover the periphery of the nozzle 64. The filament heating device 63 heats the filament F. The filament F is softened by being heated by the filament heating device 63. For the filament heating device 63, for example, a cartridge heater or an aluminum foil heater can be used. Examples of the heating method of the filament heating device 63 include using an electric heater (surface heater, plate heater, aluminum foil heater, cartridge heater), high frequency heating, induction heating, ultrasonic heating, laser heating, and the like.

The nozzle 64 is disposed below the filament drive roller 61. In one example, the nozzle 64 is formed in a cylindrical shape. The filament F sent out from the filament drive roller 61 is supplied into the nozzle 64. Various shapes can be applied to the nozzle 64. The nozzle 64 is provided with an opening (nozzle opening, exit opening) for discharging the filament F. The nozzle opening is set depending on the thickness of the filament F to be discharged. For example, the nozzle opening can be changed by replacing the nozzle 64 with another nozzle. Additionally and/or alternatively, a plurality of nozzles 64 can be provided in one head unit 6. The number of inlets (inlet ports) and the number of outlets (outlet ports) in the head unit 6 may be the same or different.

The head moving mechanism 7 is a mechanism for moving the head unit 6 in a direction intersecting the Y direction (for example, the X direction and the Y direction). In one example, the head moving mechanism 7 is equipped with an X-axis drive device 71 and a Y-axis drive device 72. The X-axis drive device 71 moves the head unit 6 in the X direction under the control of the control device 9. The Y-axis drive device 72 moves the head unit 6 in the Y direction under the control of the control device 9. That is, the head moving mechanism 7 moves the head unit 6 two-dimensionally in the X direction and the Y direction under the control of the control device 9. Various types of head moving mechanisms 7 are applicable. In one example, the head moving mechanism 7 may include a robot arm. The head unit 6 can move along a plane parallel to the modeling table 3 by using the robot arm. In another example, the head moving mechanism 7 can be configured to move the head unit 6 in three dimensions or with six degrees of freedom (X, Y, Z, θX, θY, θZ). The head moving mechanism 7 can be configured such that a posture regarding at least a part of an inclination and a rotation angle can be adjusted, in addition to a relative positional relationship between the head unit 6 and the modeling table 3 in the X-axis direction, Y-axis direction, and Z-axis direction.

The pressing roller unit 8 is a unit capable of heating and pressing the filament F on the modeling table 3. In one example, the pressing roller unit 8 is provided separately from the head unit 6 having the nozzle 64, as shown in FIG. 1. The pressing roller unit 8 is provided with a mechanism for heating the filament F on the modeling table 3 as a heating device separate from the filament heating device 63 of the head unit 6 and the heating device provided on the modeling table 3.

The pressing roller unit 8 includes a heating roller 81 (pressing portion), a bearing portion 82, and a support portion 83. For example, the heating roller 81 is formed in a cylindrical shape, and is supported to be rotatable about the axial core parallel to the modeling surface (upper surface) of the modeling table 3. In one example, the heating roller 81 is supported to be rotatable about the axial core parallel to the Y direction. That is, the axial core of the heating roller 81 is parallel to the Y direction. In another example, the axial core of the heating roller 81 can be set not to be parallel to the Y direction. For example, the axial core of the heating roller 81 may be parallel to the X direction, or the axial core of the heating roller 81 may be inclined with respect to the X direction and the Y direction. In another example, the shape of the roller body of the heating roller 81 can have a shape other than a cylindrical shape. In addition, the heating roller 81 may be configured so that the roller body does not substantially rotate.

The heating roller 81 includes the roller body and a heater disposed inside the roller body. In one example, the heater of the heating roller 81 generates heat under the control of the control device 9. The heating roller 81 heats and presses the filament F (material layer). Both ends of the heating roller 81 are supported by a bearing portion 82. Examples of the heating means of the heating roller 81 include an electric heater (cartridge heater, heat roll), a high-frequency heating means, an induction heating means, an ultrasonic heating means, a laser heating means, and the like.

In one example, the heating roller 81 is rotated in accordance with the movement of the modeling table 3 in the X direction. That is, when the modeling table 3 is moved in the X direction with the peripheral surface of the heating roller 81 in contact with the filament F on the modeling table 3, the heating roller 81 rotates about its axial core. In another example, the pressing roller unit 8 can be equipped with a drive unit that rotatably drives the heating roller 81. When such a drive unit is equipped, for example, the rotation speed of the heating roller 81 is adjusted depending on the movement speed of the modeling table 3 in the X direction.

In one example, the heating roller 81 can be set to a temperature higher than that of the nozzle 64. For example, when pressing (compressing) the filament F, the heating roller 81 (the surface of the heating roller 81) is heated to a temperature higher than that of the nozzle 64 under the control of the control device 9. When the filament F discharged onto the modeling table 3 is separated from the nozzle 64, its temperature decreases and its viscosity increases. The heating roller 81 is cooled by coming into contact with the cooled filament F. When the temperature of the heating roller 81 is the same as the temperature of the nozzle 64, there is a possibility that the temperature of the filament F will not rise to the same temperature as when it is discharged from the nozzle 64. On the other hand, the heating roller 81 is set to a temperature higher than the set temperature of the nozzle 64 as described above, and thus the temperature of the filament F on the modeling table 3 can be increased to the same level as when it is discharged or a higher level.

The set temperature of the heating roller 81 is not limited to a temperature higher than that of the nozzle 64, and can be set arbitrarily. For example, the set temperature of the heating roller 81 is in the range of -150°C to +150°C with respect to the set temperature of the nozzle 64, and is approximately -150°C, -140°C, -130°C, - 120°C, -110°C, -100°C, -90°C, -80°C, -70°C, -60°C, -50°C, -40°C, -30°C, -20°C, -10°C, 0°C, +10°C, +20°C, +30°C, +40°C, +50°C, +60°C, +70°C, +80°C, +90°C, +100°C, +110°C, +120°C, +130°C, +140°C, or +150°C. The temperature of the heating roller 81 is set in accordance with the material of the filament F, the specifications of a target modeled object, a processing speed, and the like. The set temperature of the heating roller 81 may be a value falling outside the above range.

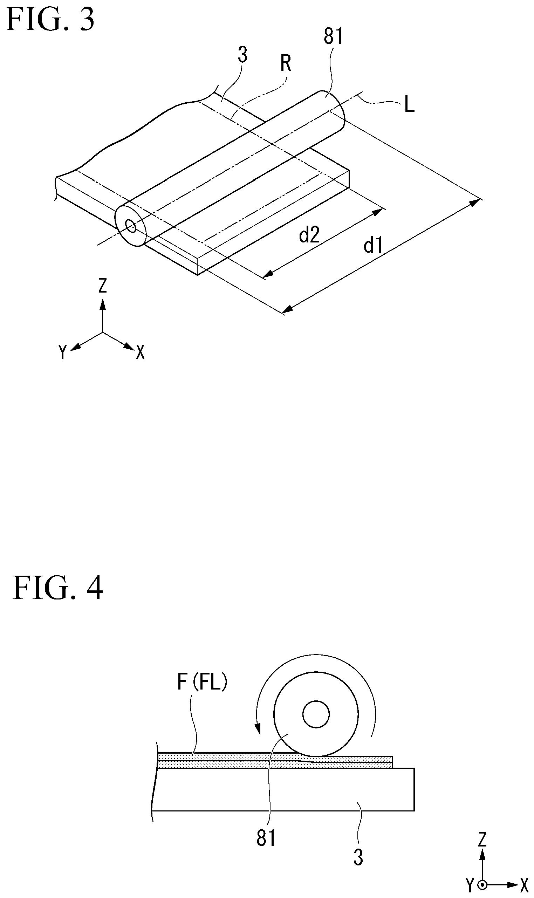

FIG. 3 is a perspective view schematically showing a relationship between the heating roller 81 and the modeling table 3, and shows comparison between the heating roller 81 and the modeling table 3. As shown in FIG. 3, the length dimension of the heating roller 81 in the direction along an axial core L (Y direction) is d1. In addition, the length dimension in the Y direction (length in a direction along the axial core L) of an arrangeable region R of the filament F on the modeling table 3 is d2. In one example, the length dimension d1 of the heating roller 81 is set to be larger than the length dimension d2 of the arrangeable region R on the modeling table 3. In this case, the modeling table 3 is moved in the X direction, and thus it is possible to press the entire filament F on the modeling table 3 with the heating roller 81 without moving it in the Y direction. A pressing process is performed on substantial the entire surface of the material layer FL by relative movement between the modeling table 3 and the heating roller 81 (relative movement in a direction intersecting the Z direction, compression mode movement). In one example, the substantial length of the heating roller 81 is set to be larger than the width of the material layer (compressed target layer) FL, and a pressing process is performed on substantially the entire surface of the material layer FL by one relative movement. In another example, the substantial length of the heating roller 81 is set to be larger than the width of the material layer (compressed target layer) FL, and a pressing process is performed on substantially the entire surface of the material layer FL by a plurality of relative movements. In another example, the substantial length of the heating roller 81 is set to be smaller than the width of the material layer (compressed target layer) FL, and a pressing process is performed on substantially the entire surface of the material layer FL by a plurality of relative movements. In still another example, a pressing process is performed on substantially the entire surface of the material layer (compressed target layer) FL by relative movement using a plurality of heating rollers 81.

In one example, surface treatment for giving a certain functionality to the peripheral surface (outer surface) of the heating roller 81 is performed. Examples of functions that are given through the surface treatment include liquid repellency, adhesiveness, releasability, chemical resistance, heat resistance, weather resistance, corrosion resistance, hardness, wear resistance, lubricity, thermal conductivity, and the like. Examples of the surface treatment include plating, chemical treatment, film formation treatment, coating treatment, and surface processing treatment. For example, fine irregularities and/or grooves may be formed on the peripheral surface (outer peripheral surface) of the main body of the heating roller 81. For example, the peripheral surface (outer peripheral surface) of the main body of the heating roller 81 may be resin-coated (for example, fluorine-coated). The surface treatment curbs, for example, the adhesion of the softened filament F. Such surface treatment may also be performed on the nozzle 64.

Returning back to FIG. 1, the bearing portion 82 pivotally supports the heating roller 81. The bearing portion 82 is provided at each of both ends of the heating roller 81. These bearing portions 82 are supported by the frame 2 via the support portion 83.

The support portion 83 supports the heating roller 81 via the bearing portion 82. For example, the support portion 83 has a configuration in which a plurality of units provided for each of the bearing portions 82 are separately attached to a fixed portion (frame 2, or the like). Alternatively, the support portion 83 has a configuration in which one unit provided for a plurality of bearing portions 82 is attached to a fixed portion (frame 2, or the like). The support portion 83 can have a position adjustment mechanism for adjusting the support position of the heating roller 81. For example, the support portion 83 can be configured to adjust at least one of six degrees of freedom (X, Y, Z, θX, θY, θZ) of the axis of the heating roller 81. In one example, the support portion 83 is configured to be able to move the posture of the heating roller 81 in three dimensions, or to be able to move in six degrees of freedom (X, Y, Z, θX, θY, θZ). The position adjustment mechanism can be configured such that a posture regarding at least a part of an inclination and a rotation angle can be adjusted, in addition to a relative positional relationship between the heating roller 81 and the modeling table 3 in the X-axis, Y-axis, and Z-axis directions. For example, each of the support portions 83 may be extendable in the up-down direction (Z direction). Each of the support portions 83 is extendable in the up-down direction, and thus the position and/or posture (inclination of the axis, or the like) of the heating roller 81 in the Z direction can be adjusted. The support portion 83 is extendable in the up-down direction by including, for example, a cylinder unit. For example, the position adjustment mechanism controls the inclination (for example, θX and/or θZ) of the axis of the heating roller 81 with respect to the direction of the relative movement between the modeling table 3 and the heating roller 81.

The control device 9 controls the lifting device 4, the slide mechanism 5, the head unit 6, the head moving mechanism 7, and the pressing roller unit 8. For example, the control device 9 controls the lifting device 4 so that the head unit 6 moves up and down. The control device 9 also controls the slide mechanism 5 so that the modeling table 3 moves in the X direction. The control device 9 also controls the head unit 6 to heat the filament F and discharge the filament F from the nozzle 64. The control device 9 also controls the head moving mechanism 7 so that the head unit 6 moves. The control device 9 also controls the pressing roller unit 8 to raise the temperature of the heating roller 81.

The control device 9 also controls the slide mechanism 5 so that the modeling table 3 moves below the pressing roller unit 8 when the heating roller 81 presses the filament F. A modeled body is formed by stacking layers of the filament F on the modeling table 3.

As shown in FIG. 2(a), the control device 9 continuously disposes the filament F on the modeling table 3 along the printing path to form a sheet-like material layer FL. For example, the head unit 6 moves relative to the modeling table 3 in the X and Y directions, and the filament F for a first layer is discharged from the head unit 6. In one example, the printing path for one layer has a first extension portion (first line element), a second extension portion (second line element), and a folded portion (third line element, curved portion, bent portion, intermediate portion) between the first extension portion and the second extension portion. The first extension portion corresponds mainly to first movement (first relative movement, first direction printing movement) of the head unit 6 in the first direction. The second extension portion corresponds mainly to the second movement (second relative movement, second direction printing movement) of the head unit 6 in the second direction, which is opposite to the first direction. In one example of an element area, the first extension portion and the second extension portion are adjacent to each other. In another example of the element area, a plurality of first extension portions are adjacent to each other, or a plurality of second extension portions are adjacent to each other. The folded portion corresponds to the transition movement (folded movement) of the head unit 6 between the first movement and the second movement. For example, the folded portion includes a curved shape and a bent shape. When the formation of the first layer is completed, the modeling table 3 moves away from the head unit 6, and a process of forming a second layer on a first layer is performed. For example, the head unit 6 moves relatively to the modeling table 3 in the X direction and the Y direction, and the filament F for the second layer is discharged from the head unit 6.

As shown in FIG. 2(b), the control device 9 compresses the material layer FL with the heating roller 81 during the process of stacking the filament F to form the modeled body. The control device 9 controls the pressing roller unit 8 so that the heating roller 81 compresses the filament F (material layer FL) on the modeling table 3.

In one example, the control device 9 performs a compression process for each layer (single layer). That is, after the first material layer FL configured with the first layer is formed, a compression process is performed on the first material layer FL before the formation of the second layer. In addition, after the second material layer FL configured with the second layer is formed, a compression process is performed on the second material layer before the formation of a third layer. For example, a pressing amount (compression amount) of the filament F is set on the basis of a distance from the heating roller 81 to the modeling surface of the modeling table 3. In one example, the pressing amount is set to 5% to 95% of the diameter (thickness of one layer) of the filament F discharged from the head unit 6. For example, when the diameter of the filament F is 0.2 mm, the pressing amount is set to approximately 0.01 mm to 0.19 mm. In one example, the pressing amount is set to approximately 5%, 10%, 15%, 20%, 25%, 30%, 35%, 40%, 45%, 50%, 55%, 60%, 65%, 70%, 75%, 80%, 85%, 90%, or 95% of the diameter (thickness of one layer) of the filament F discharged from the head unit 6. In another example, the pressing amount can be set to a value other than the above. In one example, the control device 9 controls the position adjustment mechanism of the support portion 83 of the pressing roller unit 8 and/or adjusts the position of the modeling table 3 in the Z direction to adjust the pressing amount.

In another example, the control device 9 performs a compression process for each of a plurality of layers. That is, after the first material layer FL configured with a plurality of layers is formed, a compression process is performed on the first material layer FL before the formation of the next layer. In addition, after the second material layer FL configured with a plurality of layers is formed, a compression process is performed on the second material layer FL before the formation of the next layer. In one example, the pressing amount is set to 5% to 95% for the material layer FL configured with a plurality of layers. For example, the pressing amount is set to approximately 5%, 10%, 15%, 20%, 25%, 30%, 35%, 40%, 45%, 50%, 55%, 60%, 65%, 70%, 75%, 80%, 85%, 90%, or 95% of the thickness of the material layer (multi-layer) FL. In another example, the pressing amount can be set to a value other than the above.

Next, an example of an operation of the three-dimensional printing apparatus 1 (three-dimensional printing method) will be described.

Shape data of a target modeled object is input to the storage unit of the control device 9 or an external storage unit. In one example, the shape data is three-dimensional data (three-dimensional model data), which is sliced by a control program and converted into a stack of two-dimensional data. Furthermore, a printing process in two-dimensional data of each layer is determined by the control program. The control program determines a travel route (printing path) of the nozzle 64 on the basis of the determined two-dimensional data. The control device 9 controls the slide mechanism 5 to move the modeling table 3 so that the modeling table 3 is positioned below the head unit 6. The control device 9 controls the lifting device 4 to adjust the position of the modeling table 3 in the Z direction. For example, the control device 9 controls the lifting device 4 so that a distance from the head unit 6 to the modeling surface of the modeling table 3 is a distance suitable for discharging the filament F.

The control device 9 controls the head unit 6 so that the filament F is discharged from the nozzle 64. The filament F wound around the bobbin B is pulled out from the bobbin 50 by the filament drive roller 61 and transmitted below the filament drive roller 61. The filament F transmitted below the filament drive roller 61 is supplied to the nozzle 64. The filament F supplied to the nozzle 64 is heated and softened by the filament heating device 63. The softened filament F is discharged downward from the nozzle 64 and disposed on the modeling table 3.

The control device 9 controls the head moving mechanism 7 to move the head unit 6 in a state where the filament F is discharged. The control device 9 moves the head unit 6 (nozzle 64) via the head moving mechanism 7 along a plane including the X and Y directions on the basis of the two-dimensional data of the modeled body.

The modeled body is formed by stacking a plurality of layers of the filament F in the Z direction. The control device 9 sequentially forms a plurality of layers. The control device 9 controls the head moving mechanism 7 to move the head unit 6 in a direction intersecting the Z direction (for example, the X and Y directions). The filament F continuously discharged from the head unit 6 is disposed on the modeling table 3, and one layer is formed.

When one layer is formed, the control device 9 controls the head unit 6 to stop the discharge of the filament F and moves the modeling table 3 below the pressing roller unit 8. The heating roller 81 of the pressing roller unit 8 is disposed at a position where the uppermost layer of the material layer FL of the filament F disposed on the modeling table 3 can be pressed. The control device 9 moves the modeling table 3 below the pressing roller unit 8. The control device 9 controls the slide mechanism 5 to move the modeling table 3 in the X direction. As shown in FIG. 4, the material layer FL of the filament F is pressed by the heating roller 81.

In addition, when the heating roller 81 presses the material layer FL of the filament F with the heating roller 81, the control device 9 heats the heating roller 81. By heating the heating roller 81, the material layer FL of the filament F is heated. For example, the filament F that has hardened due to a drop in temperature after being discharged from the nozzle 64 is heated and softened again. The filament F is pressed in a softened state, thereby improving, for example, adhesion between peripheral surfaces of intermediate portions of adjacent filaments F. The control device 9 presses the heating roller 81 against the material layer FL of the filament F so that the plurality of line elements of the filament F (printing material) are pressed against each other in the lateral direction. Here, the lateral direction is a direction that intersects the Z direction and the axial direction of the filament F in a predetermined region (element area, segment) of one layer, and is a direction in which a plurality of adjacent line elements in the filament F of one layer are lined up. The adhesion between the lowermost filament F and the modeling table 3 can be improved by pressing the lowermost filament F if necessary.

The control device 9 controls the lifting device 4 to lower the modeling table 3. For example, the modeling table 3 is lowered by the thickness of one layer. The control device 9 controls the slide mechanism 5 to move the modeling table 3 again to below the head unit 6. The control device 9 controls the head unit 6 to discharge a new filament F so that it is stacked on the filament F previously disposed on the modeling table 3. When a new layer is formed by the filament F, the control device 9 presses the layer of the filament F again by the pressing roller unit 8. The control device 9 presses the heating roller 81 against the material layer FL of the filament F so that the plurality of line elements of the filament (printing material) F are pressed against each other in the lateral direction and so that the plurality of line elements of the filament (printing material) F are pressed against each other in the stacking direction.

By repeating this operation, the heated filament F is stacked in a plurality of layers on the modeling table 3 to form a modeled body. Each layer is pressed (thermally compressed) using the heating roller 81 in the middle of stacking of the filament F.

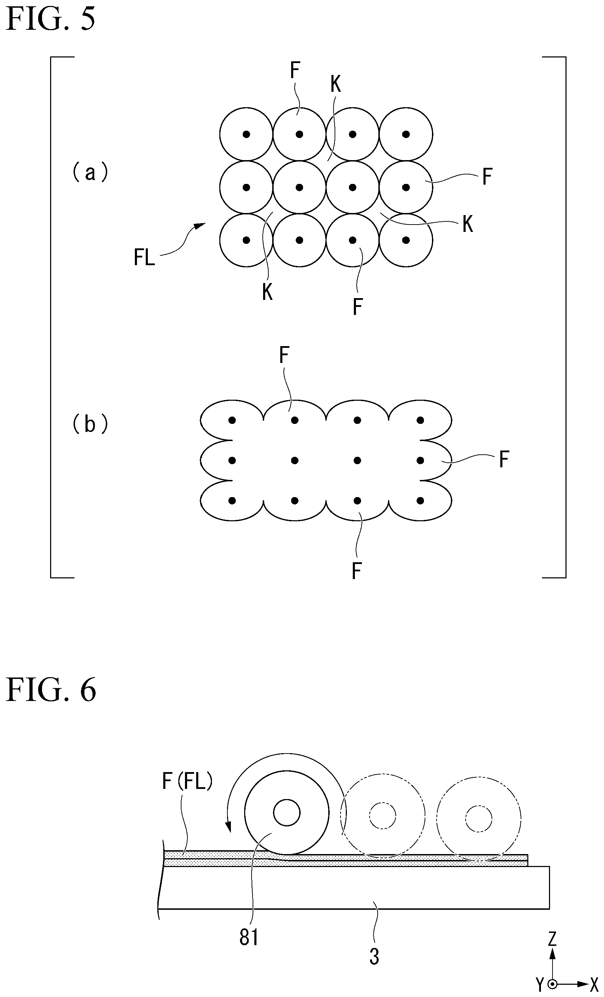

FIG. 5 is a schematic diagram showing a cross section of a layer of a filament F, where part (a) shows an unpressed state and part (b) shows a pressed state. As shown in FIG. 5(a), in the unpressed state, voids K tend to occur between the intermediate portions of the filament F (between the line elements). Such voids K lead to a decrease in the rigidity of the modeled body, and cause a decrease in mechanical properties of the modeled body.

On the other hand, in the pressed state, as shown in FIG. 5(b), the cross-sectional shape of the line element changes due to the filament F being crushed, and resins of adjacent line elements are at least partially coupled to each other. As a result, the voids K between the intermediate portions of the filament F (between the line elements) are reduced or eliminated. The reduction in the number of voids K is advantageous for improving the mechanical properties of the modeled body, such as the rigidity of the modeled body.

In general, when the filament F contains fibers, a unique phenomenon such as fiber twisting is likely to occur, especially in curved portions of the printing path. As shown in FIG. 2(b), the control device 9 performs relative movement (compression mode movement) between the modeling table 3 and the heating roller 81 so that the printing path and the movement direction of the heating roller 81 intersect each other at least partially. For example, in the curved portions of the printing path, the extension direction of the printing path and the relative movement direction of the heating roller 81 intersect each other. The filament F is reliably thermally compressed not only in the extension portion of the printing path, but also in the folded portion (curved portion). Even when the filament F contains fibers, resins of adjacent line elements in the material layer FL are reliably coupled to each other. This is advantageous for improving the mechanical properties of a fiber-containing modeled body.

The above-mentioned three-dimensional printing apparatus 1 of this embodiment includes the nozzle 64, the modeling table 3, the heating roller 81, and the control device 9. The nozzle 64 continuously discharges a heated filament F. The filaments F discharged from the nozzle 64 are stacked in a plurality of layers on the modeling table 3. The heating roller 81 can heat and press the filaments F on the modeling table 3. In addition, the heating roller 81 is provided separately from the nozzle 64. The control device 9 causes the heating roller 81 to press the filaments F on the modeling table 3 in the middle of stacking of the filaments F.

According to such a three-dimensional printing apparatus 1, the filaments F are heated and pressed during stacking. For this reason, the filaments F on the modeling table 3 are pressed in a softened state, thereby reducing voids between the intermediate portions of the filament F. Furthermore, adhesion between the intermediate portions of the filament F is improved. Thus, according to the three-dimensional printing apparatus 1 of this embodiment, the mechanical properties of the modeled body are improved.

In the three-dimensional printing apparatus 1 of this embodiment, the heating roller 81 is provided separately from the nozzle 64. Such a heating roller 81 can be separated from the nozzle 64 and moved relative to the modeling table 3. For this reason, it is not necessary to move the heating roller 81 following the nozzle 64. In addition, it is not necessary to move the nozzle 64 while taking the position of the heating roller 81 into consideration. For this reason, it is possible to simplify control.

Further, in the three-dimensional printing apparatus 1 of this embodiment, the previously formed layer is heated by the heating roller 81 before the filament F that forms the next layer is discharged onto the previously formed layer. For this reason, it is possible to improve adhesion between the previously formed layer and the newly discharged filament F, compared to when the previously formed layer is cooled.

In the three-dimensional printing apparatus 1 of this embodiment, the heating roller 81 is used as a pressing portion. For example, the heating roller 81 is formed in a cylindrical shape and is supported to be rotatable about the axial core parallel to the upper surface of the modeling table 3. According to the three-dimensional printing apparatus 1 of this embodiment, the filament F on the modeling table 3 can be easily pressed by moving the modeling table 3 and the heating roller 81 relatively.

In the three-dimensional printing apparatus 1 of this embodiment, the length dimension d1 of the heating roller 81 in the direction along the axial core is greater than the length dimension d2 of the arrangeable region R of the filament F on the modeling table 3 in the direction along the axial core. According to the three-dimensional printing apparatus 1 of this embodiment, the filament F on the modeling table 3 can be pressed without moving the heating roller 81 in the direction along the axial core.

In the three-dimensional printing apparatus 1 of this embodiment, when the heating roller 81 presses the filament F, the heating roller 81 is heated to a temperature higher than the heating temperature of the filament F in the nozzle 64. According to the three-dimensional printing apparatus 1 of this embodiment, the heating roller 81 is heated to a temperature higher than that of the nozzle 64, and thus the temperature of the filament F on the modeling table 3 can be increased to a discharge temperature or higher. For this reason, the filament F can be pressed in a sufficiently softened state, and voids between the intermediate portions of the filament F can be more reliably reduced.

In a three-dimensional printing method of this embodiment, a modeled body is formed by stacking the heated filament F in a plurality of layers on the modeling table 3. Further, in the three-dimensional printing method of this embodiment, the heating roller 81 separate from the nozzle 64 that discharges the filament F is heated, and the filament F on the modeling table 3 is pressed during stacking by using the heated heating roller 81. According to the three-dimensional printing method of this embodiment, the filament F is heated and pressed in the middle of stacking of the filament F. For this reason, the discharged filament F is pressed in a softened state, and voids between the intermediate portions of the filament F can be reduced. Furthermore, adhesion between the intermediate portions of the filament F can be improved. Thus, according to the three-dimensional printing method of this embodiment, it is possible to improve the mechanical properties of the modeled body.

Although an embodiment of the present invention has been described above with reference to the accompanying drawings, it is needless to say that the present invention is not limited to the above embodiment. The shapes and combinations of the components shown in the embodiment described above are merely examples, and various changes can be made on the basis of design requirements and the like without departing from the spirit of the present invention.

For example, in the above embodiment, a configuration in which a predetermined pressing amount is applied at once using the heating roller 81 has been described. However, the present invention is not limited thereto. For example, as shown in FIG. 6, the filament F may be pressed in a plurality of steps, thereby applying a predetermined pressing amount. By pressing the filament F in a plurality of steps, the filament F can be pressed while curbing abrupt displacement of the filament F. The number of repetitions can be set arbitrarily. In addition, the temperature of the heating roller 81 may be changed in a plurality of pressing processes. In one example, the material layer FL is compressed by the heating roller 81 at a first target temperature. Thereafter, the material layer FL is compressed by the heating roller 81 at a second target temperature different from the first target temperature. Further, thereafter, the material layer FL is compressed by the heating roller at a third target temperature different from the first target temperature and the second target temperature. In one example, the first target temperature is higher than the second target temperature, and the second target temperature is higher than the third target temperature. In another example, the first target temperature is lower than the second target temperature, and the second target temperature is lower than the third target temperature. In still another example, the first target temperature is higher than the second target temperature, and the second target temperature is lower than the third target temperature. The present invention is not limited to the above, and a temperature change can be set arbitrarily.

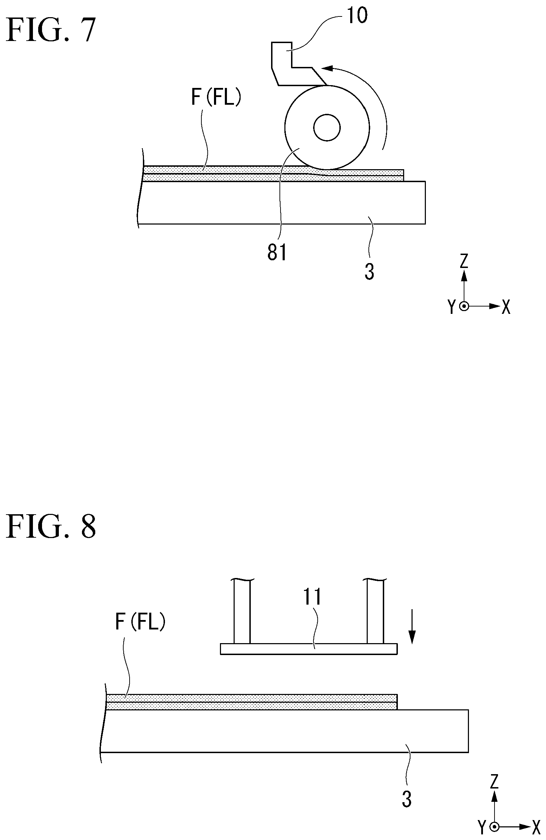

In addition, for example, as shown in FIG. 7, a scraper 10 for removing the filament F adhering to the surface of the heating roller 81 may be provided on the heating roller 81. Even when the filament F adheres to the heating roller 81, the filament F can be removed from the surface of the heating roller 81 by providing the scraper 10.

In the above embodiment, a configuration in which the heating roller 81 presses the filament F has been described. However, the present invention is not limited thereto. For example, as shown in FIG. 8, the filament F may be pressed using a heatable pressing plate 11.

In the above embodiment, the modeling table 3 may contain the same material as the filament F. For example, the modeling table 3 may be formed of the same material as that of the resin portion of the filament F. The modeling table 3 is formed of the same material as the filament F in this manner, and thus the adhesion of the filament F to the modeling table is improved. For this reason, the modeled body can be formed stably. Only the surface of the modeling table 3 may be formed of the same material as the filament F without forming the entire modeling table 3 of the same material as the filament F. That is, it is sufficient that at least the surface of the modeling table 3 contains the same material as the filament F. In such a case, for example, after the modeled body is formed, a process of cutting the modeled body from the modeling table 3 is performed.

In the above embodiment, a configuration in which only the filament F is disposed on the modeling table 3 has been described. However, the present invention is not limited thereto. For example, a support material that supports the filament F may be disposed on the modeling table 3. Such a support material may be discharged from the head unit 6. In addition, a head unit dedicated to discharging the support material may be provided separately from the head unit 6 that discharges the filament F.

In the above embodiment, a configuration in which the modeling table 3 is movable in the X and Z directions, and the head unit 6 is movable in the X and Y directions has been described. However, the present invention is not limited thereto. For example, the head unit 6 may be movable in the Z direction. In addition, for example, the modeling table 3 may be movable in the Y direction. In addition, the heating roller 81 may be movable in the X and Z directions.

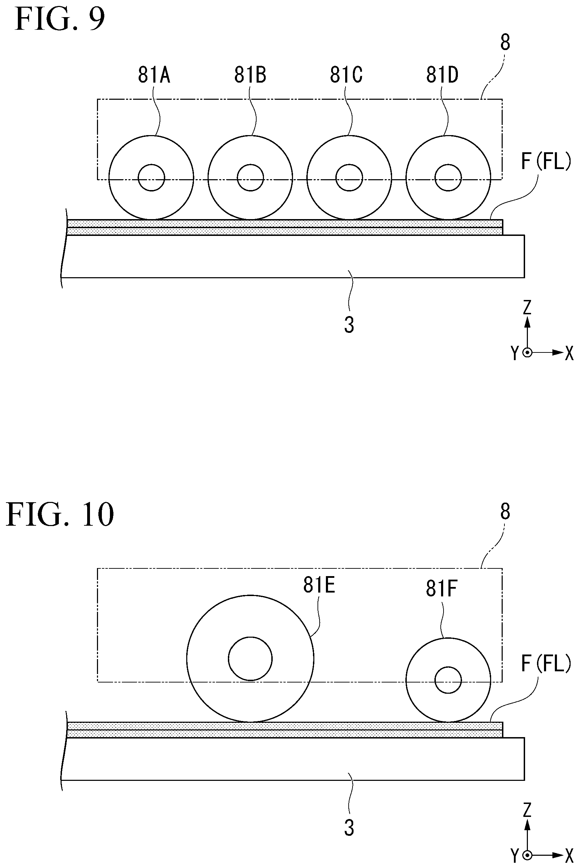

In a modification example shown in FIG. 9, the pressing roller unit 8 includes a plurality of heating rollers 81A, 81B, 81C, and 81D. Relative movement (compression mode movement) is performed between the plurality of heating rollers 81A, 81B, 81C, and 81D and the modeling table 3. Two or more of the plurality of heating rollers 81A, 81B, 81C, and 81D are pressed against the material layer FL substantially simultaneously. Height positions (Z positions) of the plurality of heating rollers 81A, 81B, 81C, and 81D are arbitrarily adjusted. In one example, the height positions (Z positions) of the plurality of heating rollers 81A, 81B, 81C, and 81D are set to be substantially the same. In another example, the heating roller 81A is set at a height position relatively far from the modeling table 3, the heating roller 81D is set at a height position relatively close to the modeling table 3, and the heating rollers 81B and 81C are set at intermediate positions therebetween. The temperatures of the plurality of heating rollers 81A, 81B, 81C, and 81D are adjusted arbitrarily. For example, the material layer FL is compressed by one heating roller 8 at a first target temperature, and the material layer FL is compressed by another heating roller at a second target temperature different from the first target temperature. In one example, the target temperatures of the plurality of heating rollers 81A, 81B, 81C, and 81D are set to be substantially the same. In another example, the target temperature of the heating roller 81A is set to be the highest, the target temperature of the heating roller 81D is set to be the lowest, and the target temperatures of the heating rollers 81B and 81C are set to be intermediate temperatures. Surface treatment for the plurality of heating rollers 81A, 81B, 81C, and 81D is adjusted arbitrarily. In one example, the same surface treatment is performed on the plurality of heating rollers 81A, 81B, 81C, and 81D. In another example, first surface treatment is performed on one heating roller 8, and second surface treatment different from the first surface treatment is performed on another heating roller. For example, the material layer FL is compressed on a first contact surface of one heating roller 8 having a first surface characteristic, and the material layer FL is compressed on a second contact surface of another heating roller having a second surface characteristic different from the first surface characteristic.

In a modification example shown in FIG. 10, the pressing roller unit 8 includes a plurality of heating rollers 81E and 81F having different outer diameters. Relative movement (compression mode movement) is performed between the plurality of heating rollers 81E and 81F and the modeling table 3. For example, the material layer FL is compressed on a first contact surface of one heating roller 81E having a first outer diameter, and the material layer FL is compressed on a second contact surface of the heating roller 8F having a second outer diameter different from the first outer diameter.

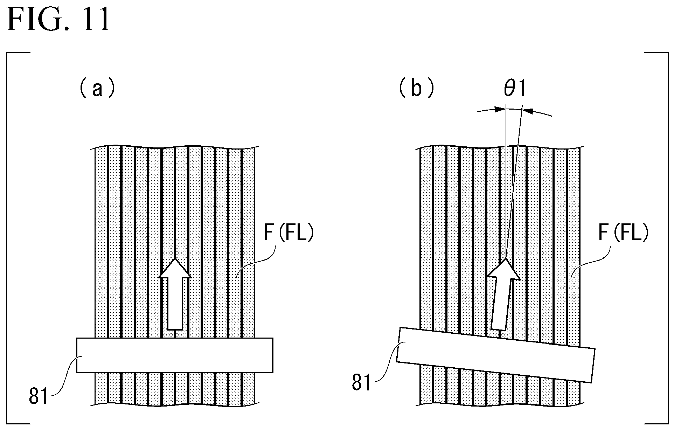

As shown in FIG. 11, the direction of relative movement (the direction of a compression path) of the heating roller 81 with respect to a printing path can be adjusted arbitrarily. An angle between a main extension direction of the printing path of the filament (printing material) F and the direction of relative movement (the direction of the compression path) during thermal compression is controlled. In the example shown in FIG. 11(a), the main extension direction of the printing path and the direction of the compression path are substantially the same. In the example shown in FIG. 11(b), a predetermined angle (an inclination of the compression path) θ1 is set between the main extension direction of the printing path and the direction of the compression path. The inclination of the compression path can be set arbitrarily. For example, the inclination θ1 of the compression path is approximately 0°, 0.5°, 1°, 2°, 3°, 4°, 5°, 6°, 7°, 8°, 9°, 10°, 20°, 30°, 40°, 50°, 60°, 70°, 80°, 81°, 82°, 83°, 84°, 85°, 86°, 87°, 88°, 89°, or 90°.

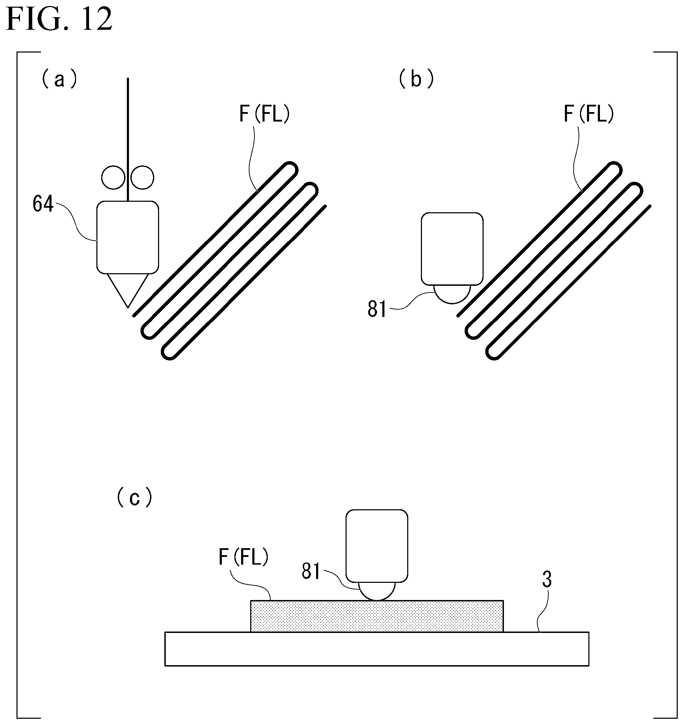

In a modification example shown in FIG. 12, the pressing roller unit 8 is equipped with the heating roller 81 of which the roller body has a shape other than a cylindrical shape. In one example, the heating roller 81 has at least a portion having a spherical or curved surface. A contact area of the heating roller 81 with respect to the material layer FL is set to be small, and thus a precise thermal compression process can be performed. The control device 9 (FIG. 1) includes a first mode in which the filament (printing material) F supplied from the nozzle 64 is continuously disposed on the modeling table 3 along the printing path to form a sheet-like material layer FL, and a second mode in which the material layer FL is compressed by the heating roller 81 along the compression path while performing relative movement between the modeling table 3 and the heating member (heating roller) 81 after the first mode. In one example, the compression path of the heating roller 81 is set to at least partially follow the printing path. In another example, the inclination of the compression path is set such that the compression path of the heating roller 81 forms a predetermined angle at least partially with respect to the printing path. For example, the compression path of the heating roller 81 intersects the printing path. In one example, the heating roller 81 is provided separately from the nozzle 64 (head unit 6). In another example, the heating roller 81 is attached to the head unit 6. The material layer FL is formed using the nozzle 64 in the first mode, and thermal compression of the material layer FL using the heating roller 81 is performed in the second mode.

Relative movement (for example, printing mode movement, compression mode movement) between a first member and a second member described in this specification may include movement of a first member relative to a second member, movement of the second member relative to the first member, and/or movement of both the first member and the second member.

### REFERENCE SIGNS LIST

1 Three-dimensional printing apparatus
2 Frame
3 Modeling table (table)
4 Lifting device
5 Slide mechanism
6 Head unit
7 Head moving mechanism
8 Pressing roller unit
9 Control device (control unit)
10 Scraper
11 Pressing plate (pressing portion)
61 Filament drive roller
62 Motor
63 Filament heating device
64 Nozzle
71 X-axis drive device
72 Y-axis drive device
81 Heating roller (pressing portion)
82 Bearing portion
83 Support portion
F Filament (modeling material, printing material)
100 First mechanism
200 Second mechanism
300 Third mechanism
K Void
L Axial core
R Arrangeable region

## Claims

1. A three-dimensional printing apparatus comprising:
a first mechanism that continuously feeds a printing material through a nozzle;
a second mechanism that includes a table on which the printing material is stacked;
a third mechanism that includes a heating member; and
a control unit that controls the first mechanism, the second mechanism, and the third mechanism, the control unit having a first mode in which the printing material supplied from the nozzle is disposed along a printing path to form a sheet-like material layer, the material layer being configured with a single layer or a plurality of layers, and a second mode in which the material layer is compressed by the heating member while performing relative movement between the table and the heating member after the first mode.

2. The three-dimensional printing apparatus according to claim 1, wherein the second mode includes pressing the heating member against the material layer so that a plurality of line elements of the printing material are pressed against each other in a lateral direction.

3. The three-dimensional printing apparatus according to claim 1 or 2, wherein
the material layer is configured with a plurality of layers, and
the second mode includes pressing the heating member against the material layer so that a plurality of line elements of the printing material are pressed against each other in a stacking direction.

4. The three-dimensional printing apparatus according to any one of claims 1 to 3, wherein the second mode includes performing the relative movement so that the printing path and a direction of movement of the heating member at least partially intersect each other.

5. The three-dimensional printing apparatus according to any one of claims 1 to 4, wherein the second mode includes controlling an angle between a main extension direction of the printing path of the printing material and a direction of the relative movement in the relative movement.

6. The three-dimensional printing apparatus according to any one of claims 1 to 5, wherein the second mode includes compressing the material layer with the heating member at a first target temperature and compressing the material layer with the heating member at a second target temperature different from the first target temperature.

7. The three-dimensional printing apparatus according to any one of claims 1 to 6, wherein the second mode includes compressing the material layer on a first contact surface of the heating member having a first surface characteristic and compressing the material layer on a second contact surface of the heating member having a second surface characteristic different from the first surface characteristic.

8. The three-dimensional printing apparatus according to any one of claims 1 to 7, wherein the third mechanism includes a cylindrical heating roller supported rotatably about an axial core parallel to an upper surface of the table.

9. The three-dimensional printing apparatus according to claim 8, wherein a length dimension of the heating roller in a direction along the axial core is larger than a length dimension of a region on the table on which the printing material is able to be arranged in a direction along the axial core.

10. The three-dimensional printing apparatus according to any one of claims 1 to 9, wherein the third mechanism is heated to a temperature higher than a heating temperature of the printing material in the nozzle when the printing material is pressed.

11. The three-dimensional printing apparatus according to any one of claims 1 to 10, wherein at least the surface of the table contains the same material as the printing material.

12. A three-dimensional printing method comprising:
a first step of disposing a printing material supplied from a nozzle on a table along a printing path to form a sheet-like material layer which is configured with a single layer or a plurality of layers; and
a second step of compressing the material layer with the heating member while performing relative movement between the table and the heating member after the first step.

13. A compression apparatus for a three-dimensional printing apparatus, wherein
the three-dimensional printing apparatus includes
a first mechanism including a nozzle that continuously feeds a printing material,
a second mechanism including a table on which the printing material is stacked, and
a control unit,
the compression apparatus comprises a thermal compression mechanism including a heating member, and
the thermal compression mechanism is configured to compress a sheet-like material layer, which is formed of the printing material, with the heating member.
